# EUROPEAN PATENT APPLICATION

(11) **EP 4 717 369 A1**
(43) Date of publication of application: **01.04.2026**
(21) Application number: 24838905.8
(22) Date of filing: 12.07.2024
(51) Int. Cl.: B09B 5/00, B09B 3/40, B09B 3/00, B09B 101/16

(54) **RECYCLING SYSTEM AND RECYCLING METHOD FOR PHOTOVOLTAIC CELL MODULE**

(30) Priority: 13.07.2023 CN 202310857035
(71) Applicant: Jereh New Energy Regeneration and Recycling Technology Co., Ltd., Laishan District Yantai Shandong 264003 (CN)
(72) Inventor: YU, Qun, Yantai, Shandong 264003 (CN); LI, Enjie, Yantai, Shandong 264003 (CN); MAO, Chuantao, Yantai, Shandong 264003 (CN); ZHAO, Jinliang, Yantai, Shandong 264003 (CN)
(74) Representative: Ziebig Hengelhaupt Intellectual Property Attorneys Patentanwaltskanzlei PartGmbB
(86) International application number: PCT/CN2024/105285
(87) International publication number: WO 2025/011654

(57) **Abstract**

This application belongs to the technical field of photovoltaic cell module recycling, and in particular, to a recycling system and recycling method for a photovoltaic cell module. The recycling system for the photovoltaic cell module includes thermal desorption equipment, a separation apparatus and a gasification apparatus. A discharging port of the thermal desorption equipment is communicated with a feeding port of the separation apparatus. The separation apparatus is configured to separate silicon solar cells from solid materials obtained after thermal desorption. A discharging port of the separation apparatus is communicated with a feeding port of the gasification apparatus, so that the separated silicon solar cells enter the gasification apparatus. The gasification apparatus is configured to gasify silver and aluminum on the silicon solar cells.

## Description

### CROSS-REFERENCE TO RELATED APPLICATIONS

This application claims priority to Chinese Patent Application No. 202310857035.6 filed to the Patent Office of the People's Republic of China on July 13, 2023, titled "RECYCLING SYSTEM AND RECYCLING METHOD FOR PHOTOVOLTAIC CELL MODULE", which is incorporated herein by reference in its entirety.

### TECHNICAL FIELD

This application belongs to the technical field of photovoltaic cell module recycling, and in particular, to a recycling system and recycling method for a photovoltaic cell module.

### BACKGROUND

In recent years, photovoltaic cell modules have developed rapidly. With the large-scale application of photovoltaic cell modules, how to recycle and reuse waste photovoltaic cell modules has become an increasingly prominent problem.

In related arts, chemical treatment is adopted to remove silver and aluminum from silicon solar cells to obtain pure silicon slices. Specifically, aluminum is first removed from the silicon solar cells through a sodium hydroxide solution, and then silver is removed from the silicon solar cells through a citric acid-hydrogen peroxide solution. Although this method can quickly remove silver and aluminum from the silicon solar cells, a large amount of acidic and alkaline wastewater containing metal ions may be generated in the chemical treatment process. Direct discharge of the acidic and alkaline wastewater containing metal ions may cause environmental pollution, so further treatment of the acidic and alkaline wastewater containing metal ions is required, which may increase the recycling difficulty of photovoltaic cell modules.

### SUMMARY

The purposes of embodiments of this application are to provide a recycling system and recycling method for a photovoltaic cell module, which can solve the problem of great difficulty in recycling the photovoltaic cell module.

According to a first aspect, an embodiment of this application provides a recycling system for a photovoltaic cell module, which includes thermal desorption equipment, a separation apparatus and a gasification apparatus. A discharging port of the thermal desorption equipment is communicated with a feeding port of the separation apparatus. The separation apparatus is configured to separate silicon solar cells from solid materials obtained after thermal desorption. A discharging port of the separation apparatus is communicated with a feeding port of the gasification apparatus, so that the separated silicon solar cells enter the gasification apparatus. The gasification apparatus is configured to gasify silver and aluminum on the silicon solar cells.

According to a second aspect, an embodiment of this application provides a recycling method for a photovoltaic cell module applied to the recycling system described above. The recycling method includes: performing thermal desorption treatment on the photovoltaic cell module; separating silicon solar cells from solid materials obtained after thermal desorption treatment; and performing gasification treatment on the silicon solar cells to gasify silver and aluminum on the silicon solar cells.

In the embodiments of this application, the thermal desorption equipment may perform thermal desorption treatment on the photovoltaic cell module to remove the EVA adhesive on the photovoltaic cell module. The solid materials obtained after thermal desorption may enter the feeding port of the separation apparatus through the discharging port of the thermal desorption equipment, and then the separation apparatus may separate the silicon solar cells from the solid materials. The separated silicon solar cells may enter the feeding port of the gasification apparatus through the discharging port of the separation apparatus, and then the gasification apparatus may gasify silver and aluminum on the silicon solar cells. It can be seen that, by adopting the gasification apparatus to gasify silver and aluminum on the silicon solar cells, this application can obtain pure silicon slices without treating the silicon solar cells by using chemical solutions. Therefore, adopting the recycling system in this application to treat the silicon solar cells may not produce acidic and alkaline wastewater containing metal ions, thus reducing the recycling difficulty of the photovoltaic cell module.

### BRIEF DESCRIPTION OF THE DRAWINGS

FIG. 1 is a schematic structural diagram of a recycling system according to an embodiment of this application;
FIG. 2 is a schematic structural diagram of a gasification apparatus according to an embodiment of this application;
FIG. 3 is a front view of a mobile disassembling device according to an embodiment of this application;
FIG. 4 is a top view of a mobile disassembling device according to an embodiment of this application;
FIG. 5 is a schematic structural diagram of a photovoltaic backboard removal device according to an embodiment of this application;
FIG. 6 a schematic partial structural diagram of a photovoltaic backboard removal device according to an embodiment of this application;
FIG. 7 is a schematic enlarged diagram of position Ain FIG. 6 according to this application;
FIG. 8 is a front view of a removal apparatus according to an embodiment of this application;
FIG. 9 is a schematic enlarged diagram of position B in FIG. 8 according to this application;
FIG. 10 is a flowchart of a recycling method according to an embodiment of this application;
FIG. 11 is a flowchart of a recycling method according to another embodiment of this application; and
FIG. 12 is a schematic structural diagram of a screening machine according to an embodiment of this application.

### Description of reference signs:

110-workbench, 111-cooling plate, 120-control system,
200-removal device, 201-first driving source, 202-transmission component, 203-guide groove,
210-cutting assembly, 211-cutter, 212-reciprocating driving member, 213-guide block,
220-winding assembly, 221-rotary driving member, 222-winding roller,
230-heating member, 231-heating source, 232-telescopic driving member, 233-second driving source,
240-supporting frame, 241-first bracket, 242-second bracket,
250-first driving mechanism, 251-third driving source, 260-second driving mechanism, 270-third driving mechanism, 271-fourth driving source, 272-walking wheel,
281-first guide rod, 282-first slider, 283-second guide rod, 284-second slider,
300-photovoltaic cell module, 310-photovoltaic backboard, 320-photovoltaic module,
410-thermal desorption equipment, 420-condensing equipment, 430-exhaust gas treatment unit, 440-cyclone dust removal apparatus, 450-feeding apparatus, 460-feeding manipulator, 470-first cooling apparatus,
500-separation apparatus, 510-screening machine, 511-first discharging port, 512-second discharging port, 513-third discharging port, 514-first screen, 515-second screen, 516-third screen, 520-first separation machine, 521-first specific gravity screener, 522-second specific gravity screener, 523-third specific gravity screener, 530-second separation machine, 531-first eddy current separator, 532-electrostatic separator, 533-second eddy current separator,
600-gasification apparatus, 610-heater, 620-material storage member, 621-silicon solar cell inlet, 622-gas outlet, 630-recycling pipeline, 631-gas conveying pipeline, 632-silver condensation pipeline, 633-aluminum condensation pipeline, 640-first insulation member, 650-second insulation member, 660-third insulation member, 670-switching valve, 680-temperature detection member, 691-vacuum pump, 692-collection box, 693-discharging valve, 694-recycling box,
700-mobile disassembling device assembly, 710-mobile chassis, 720-frame disassembling device, 730-photovoltaic backboard removal device, 740-glass disassembling device, 750-frame conveying apparatus, 760-backboard conveying apparatus, 770-glass conveying apparatus, and 780-feeding belt.

### DETAILED DESCRIPTION

The technical solutions in the embodiments of this application will be clearly and completely described below with reference to the drawings in the embodiments of this application. Apparently, the described embodiments are merely some rather than all of the embodiments of this application. All other embodiments obtained by those of ordinary skill in the art based on the embodiments of this application without making creative efforts shall fall within the protection scope of this application.

Terms such as "first" and "second" in the description and claims of this application are used for distinguishing similar objects, instead of describing a specific order or sequence. It is to be understood that data used in this way is exchangeable in a proper case, so that the embodiments of this application can be implemented in an order different from the order shown or described herein; and the objects distinguished by "first", "second" and the like are usually of the same class and do not limit the number of the objects; for example, the number of first objects may be one or more. In addition, "and/or" in the description and claims represents at least one of the connected objects. Character "/" generally represents an "or" relationship between the associated objects.

A recycling system and recycling method for a photovoltaic cell module provided in embodiments of this application will be described below in detail through specific embodiments and application scenarios with reference to the drawings.

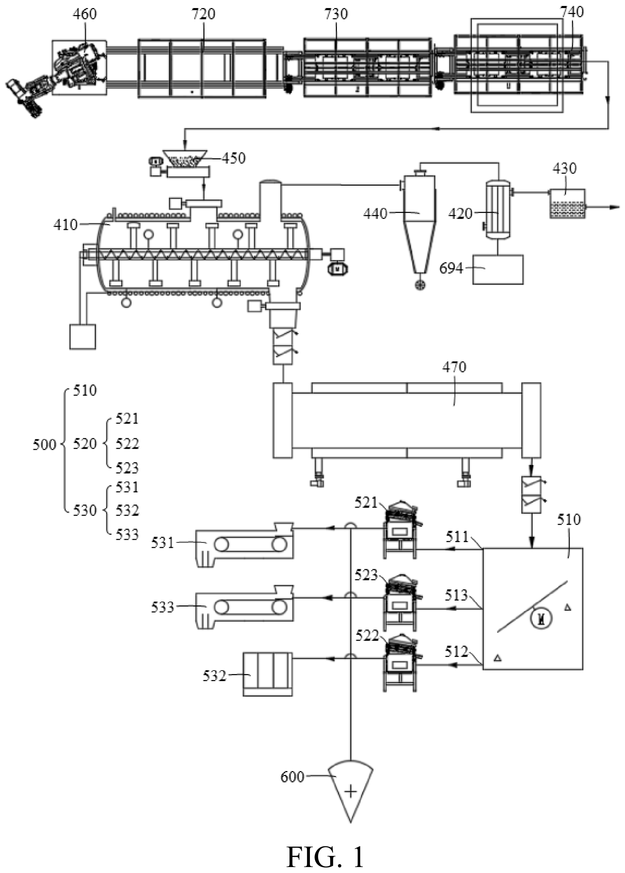

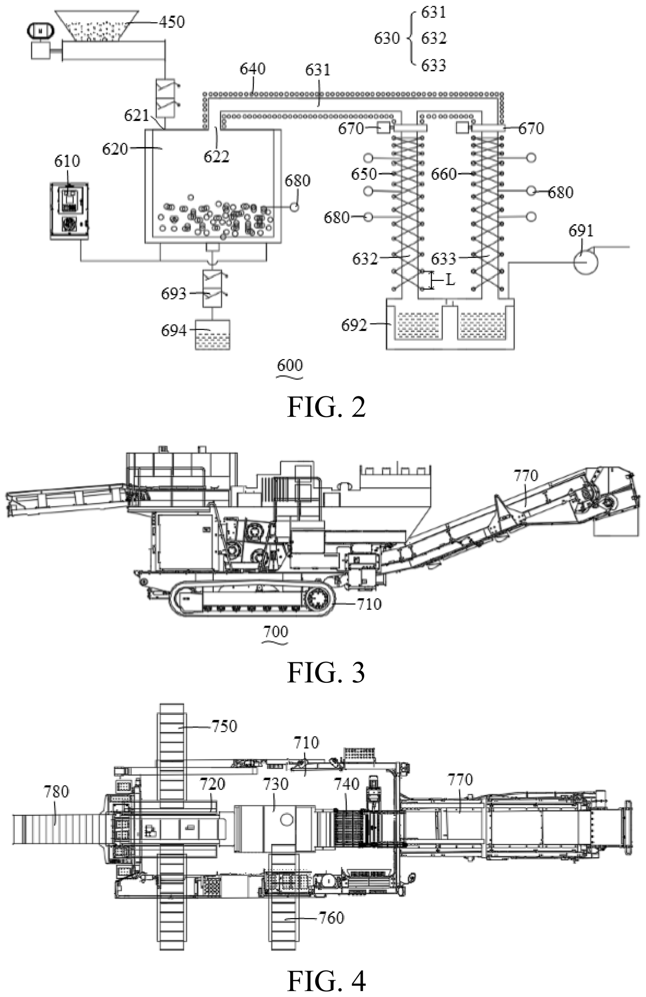

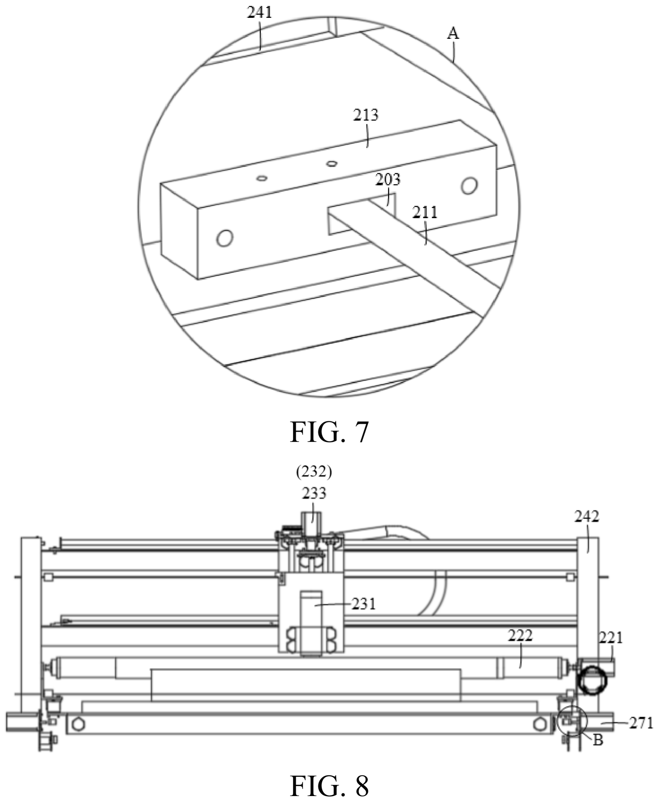

As shown in FIG. 1 to FIG. 9, an embodiment of this application discloses a recycling system for a photovoltaic cell module, which includes thermal desorption equipment 410, a separation apparatus 500 and a gasification apparatus 600. A discharging port of the thermal desorption equipment 410 is communicated with a feeding port of the separation apparatus 500. The separation apparatus 500 is configured to separate silicon solar cells from solid materials obtained after thermal desorption. A discharging port of the separation apparatus 500 is communicated with a feeding port of the gasification apparatus 600, so that the separated silicon solar cells enter the gasification apparatus 600. The gasification apparatus 600 is configured to gasify silver and aluminum on the silicon solar cells. Alternatively, the discharging port of the thermal desorption equipment 410 may be directly communicated with the feeding port of the separation apparatus 500, or indirectly communicated through other components such as a first cooling apparatus 470. The first cooling apparatus 470 may cool the solid materials obtained after thermal desorption, for example, to 40°C-80°C, so as to prevent high-temperature solid materials from damaging the separation apparatus 500.

In the embodiment of this application, the thermal desorption equipment 410 may perform thermal desorption treatment on a photovoltaic cell module 300 to remove the EVA adhesive on the photovoltaic cell module 300. The solid materials obtained after thermal desorption may enter the feeding port of the separation apparatus 500 through the discharging port of the thermal desorption equipment 410, and then the separation apparatus 500 may separate the silicon solar cells from the solid materials. The separated silicon solar cells may enter the feeding port of the gasification apparatus 600 through the discharging port of the separation apparatus 500, and then the gasification apparatus 600 may gasify silver and aluminum on the silicon solar cells. It can be seen that, by adopting the gasification apparatus 600 to gasify silver and aluminum on the silicon solar cells, this application can obtain pure silicon slices without treating the silicon solar cells by using chemical solutions. Therefore, adopting the recycling system in this application to treat the silicon solar cells may not produce acidic and alkaline wastewater containing metal ions, thus reducing the recycling difficulty of the photovoltaic cell module 300.

Alternatively, the separation apparatus 500 may be a specific gravity screening machine, a vertical winnowing machine, a horizontal winnowing machine, and the like. In this case, the separation apparatus 500 needs to treat all solid materials obtained after thermal desorption, the treatment amount is large, and copper wire clusters in the solid materials may interfere with the separation of silicon solar cells by the separation apparatus 500. In an alternative embodiment, the separation apparatus 500 includes a screening machine 510 and a first separation machine 520. A feeding port of the screening machine 510 is communicated with the discharging port of the thermal desorption equipment 410. A feeding port of the first separation machine 520 is communicated with a discharging port of the screening machine 510. A discharging port of the first separation machine 520 is communicated with the feeding port of the gasification apparatus 600. Specifically, the screening machine 510 is configured to separate the copper wire clusters from the solid materials, and the first separation machine 520 is configured to further separate the silicon solar cells from the solid materials from which the copper wire clusters have been separated. That is to say, the copper wire clusters are first separated from the solid materials by the screening machine 510, and then the silicon solar cells are separated by the first separation machine 520. Alternatively, the first separation machine 520 may be a specific gravity screening machine, a vertical winnowing machine, a horizontal winnowing machine, and the like. In this embodiment, the screening machine 510 may screen out the copper wire clusters from the solid materials, thus reducing the total amount of materials entering the separation apparatus 500, reducing the treatment amount of the separation apparatus 500, preventing the copper wire clusters from interfering with the separation of the silicon solar cells by the first separation machine 520, and facilitating the recycling of the screened copper wire clusters.

In the previous embodiment, after the silicon solar cells are separated from the solid materials, the solid materials still contain copper and glass. To facilitate the separation of copper and glass in the solid materials, in an alternative embodiment, the separation apparatus 500 further includes a second separation machine 530. The discharging port of the first separation machine 520 includes a silicon solar cell outlet and a mixture outlet. The silicon solar cell outlet is communicated with the feeding port of the gasification apparatus 600. A feeding port of the second separation machine 530 is communicated with the mixture outlet. The solid materials with the silicon solar cells separated may enter the second separation machine 530 through the mixture outlet. The second separation machine 530 is configured to separate copper and glass from the solid materials that enter the second separation machine 530. In this embodiment, the silicon solar cells separated by the first separation machine 520 may enter the feeding port of the gasification apparatus 600 through the silicon solar cell outlet, and the remaining solid materials may enter the second separation machine 530 through the mixture outlet, so that copper and glass can be separated from the remaining solid materials and then copper and glass are respectively recycled, thus improving the recycling rate of the photovoltaic cell module 300.

In an alternative embodiment, the screening machine 510 includes a first screen 514 and a second screen 515. Meshes of the first screen 514 are larger than meshes of the second screen 515. The first screen 514 is located between the feeding port of the screening machine 510 and the second screen 515. The first screen 514 is configured to separate the copper wire clusters from the solid materials. The second screen 515 is configured to screen out copper and glass with different particle sizes. Specifically, materials above the first screen 514 are the copper wire clusters, materials above the second screen 515 are silicon solar cells, copper and glass with relatively large particle sizes, and materials below the second screen 515 are silicon solar cells, copper and glass with relatively small particle sizes.

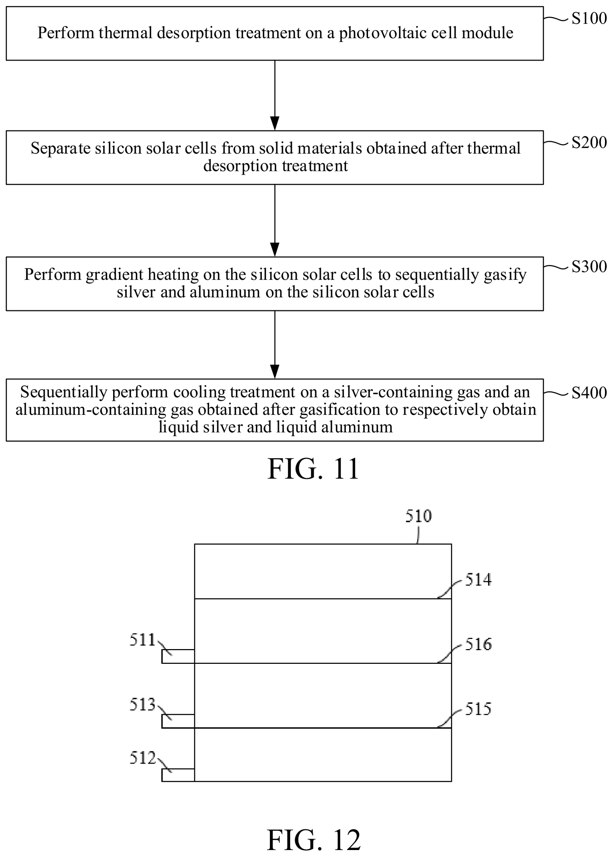

Referring to FIG. 12, the first separation machine 520 includes a first specific gravity screener 521 and a second specific gravity screener 522. The discharging port of the screening machine 510 includes a first discharging port 511 and a second discharging port 512. The first discharging port 511 is located between the first screen 514 and the second screen 515, and the second screen 515 is located between the second discharging port 512 and the first discharging port 511. Specifically, the silicon solar cells, copper and glass with relatively large particle sizes may enter the first specific gravity screener 521 through the first discharging port 511, while the silicon solar cells, copper and glass with relatively small particle sizes may enter the second specific gravity screener 522 through the second discharging port 512.

A feeding port of the first specific gravity screener 521 is communicated with the first discharging port 511. A feeding port of the second specific gravity screener 522 is communicated with the second discharging port 512. A discharging port of the first specific gravity screener 521 includes a first silicon solar cell outlet and a first mixture outlet. A discharging port of the second specific gravity screener 522 includes a second silicon solar cell outlet and a second mixture outlet. The first silicon solar cell outlet and the second silicon solar cell outlet are respectively communicated with the feeding port of the gasification apparatus 600. The mixture outlet includes the first mixture outlet and the second mixture outlet. Specifically, the first specific gravity screener 521 may separate the silicon solar cells with relatively large particle sizes from the mixture of silicon solar cells, copper and glass, and the remaining copper and glass with relatively large particle sizes may enter a first eddy current separator 531 described below through the first mixture outlet. The second specific gravity screener 522 may separate the silicon solar cells with relatively small particle sizes from the mixture of silicon solar cells, copper and glass, and the remaining copper and glass with relatively small particle sizes may enter an electrostatic separator 532 described below through the second mixture outlet.

The second separation machine 530 includes the first eddy current separator 531 and the electrostatic separator 532. A feeding port of the first eddy current separator 531 is communicated with the first mixture outlet. A feeding port of the electrostatic separator 532 is communicated with the second mixture outlet. From the above analysis, it can be seen that the first eddy current separator 531 is configured to separate copper and glass with relatively large particle sizes, thus respectively obtaining copper and glass with relatively large particle sizes, and the electrostatic separator 532 is configured to separate copper and glass with relatively small particle sizes, thus respectively obtaining copper and glass with relatively small particle sizes. It can be seen that copper and glass with different particle sizes can be recycled and obtained respectively in this embodiment, thus facilitating subsequent treatment of copper and glass with different particle sizes. In addition, since the particle sizes of the materials that eddy current separation and electrostatic separation are adapted to are different, the two can achieve better separation efficiency only at the particle sizes of the materials they are adapted to. In this embodiment, copper and glass with different particle sizes are screened out through the second screen 515, so that the copper and glass with different particle sizes enter the first eddy current separator 531 and the electrostatic separator 532 respectively, to adapt to the particle sizes of the materials that can be treated by the first eddy current separator 531 and the electrostatic separator 532, so that both the first eddy current separator 531 and the electrostatic separator 532 can achieve better separation efficiency.

Further, the screening machine 510 further includes a third screen 516. Meshes of the third screen 516 are larger than the meshes of the second screen 515 but smaller than the meshes of the first screen 514. The discharging port of the screening machine 510 further includes a third discharging port 513 located between the first discharging port 511 and the second discharging port 512. The third screen 516 is located between the first discharging port 511 and the third discharging port 513, and the second screen 515 is located between the second discharging port 512 and the third discharging port 513. Specifically, materials above the third screen 516 are silicon solar cells, copper and glass with relatively large particle sizes, materials above the second screen 515 are silicon solar cells, copper and glass with medium particle sizes, and materials below the second screen 515 are silicon solar cells, copper and glass with relatively small particle sizes.

The first separation machine 520 further includes a third specific gravity screener 523. A feeding port of the third specific gravity screener 523 is communicated with the third discharging port 513. A discharging port of the third specific gravity screener 523 includes a third silicon solar cell outlet and a third mixture outlet. The third silicon solar cell outlet is communicated with the feeding port of the gasification apparatus 600. The mixture outlet includes the third mixture outlet. Specifically, the first specific gravity screener 521 may separate the silicon solar cells with relatively large particle sizes from the mixture of silicon solar cells, copper and glass. The third specific gravity screener 523 may separate the silicon solar cells with medium particle sizes from the mixture of silicon solar cells, copper and glass, and the remaining copper and glass with medium particle sizes may enter a second eddy current separator 533 described below through the third mixture outlet. The second specific gravity screener 522 may separate the silicon solar cells with relatively small particle sizes from the mixture of silicon solar cells, copper and glass.

The second separation machine 530 further includes the second eddy current separator 533. A feeding port of the second eddy current separator 533 is communicated with the third mixture outlet. From the above analysis, it can be seen that copper and glass with relatively large particle sizes can be obtained respectively through the first eddy current separator 531, copper and glass with medium particle sizes can be obtained respectively through the second eddy current separator 533, and copper and glass with relatively small particle sizes can be obtained respectively through the electrostatic separator 532. It can be seen that copper and glass with three different particle sizes can be recycled and obtained respectively in this embodiment, thus facilitating subsequent treatment of copper and glass with three different particle sizes. In addition, this embodiment screens out copper and glass with three different particle sizes through the third screen 516 and the second screen 515, so that the copper and glass with three different particle sizes respectively enter the first eddy current separator 531, the second eddy current separator 533 and the electrostatic separator 532, to adapt to the particle sizes of the materials that can be treated by the first eddy current separator 531, the second eddy current separator 533 and the electrostatic separator 532, so that the first eddy current separator 531, the second eddy current separator 533 and the electrostatic separator 532 can achieve the best separation efficiency. Alternatively, a diameter of the meshes of the first screen 514 may be 10 mm to 20 mm, a diameter of the meshes of the third screen 516 may be 5 mm to 8 mm, and a diameter of the meshes of the second screen 515 may be 0.5 mm to 1 mm.

In an alternative embodiment, the gasification apparatus 600 includes a heater 610 and a material storage member 620. A heat transfer channel is provided between the heater 610 and the material storage member 620 to heat the material storage member 620. The material storage member 620 is provided with a silicon solar cell inlet 621 and a gas outlet 622. The silicon solar cell inlet 621 is communicated with the discharging port of the separation apparatus 500. Gasification gas obtained after gasification of aluminum and silver is discharged out of the material storage member 620 through the gas outlet 622. Alternatively, the material storage member 620 is further provided with a material outlet. The material outlet is connected with a discharging pipe. The discharging pipe is provided with a discharging valve 693. The discharging pipe is communicated with a recycling box 694. After the discharging valve 693 is opened, pure silicon slices with silver and aluminum removed may enter the recycling box 694 through the discharging pipe to facilitate recycling of the pure silicon slices. The specific operation process is as follows: the silicon solar cells separated by the separation apparatus 500 may enter the material storage member 620 through its own discharging port, and the heater 610 is controlled to heat the material storage member 620 to increase the temperature of the material storage member 620. Since the silicon solar cells are located inside the material storage member 620, the temperature of the silicon solar cells may increase with the temperature of the material storage member 620. When the temperature of the silicon solar cells is higher than the gasification temperature of silver and aluminum, silver and aluminum on the silicon solar cells may become gases and the gases may be discharged out of the material storage member 620 through the gas outlet 622. Moreover, in this embodiment, the structure of the gasification apparatus 600 is simple and the manufacturing cost is low.

Alternatively, the silicon solar cell inlet 621 of the material storage member 620 is further provided with a feeding apparatus 450. The feeding apparatus 450 includes a feeding funnel and a screw conveyor that are communicated with each other. The discharging port of the separation apparatus 500 is communicated with a feeding port of the feeding funnel. A discharging port of the screw conveyor is communicated with the silicon solar cell inlet 621 of the material storage member 620.

Alternatively, the heater 610 may be a Joule heater or an electromagnetic heater. The heating efficiency of the Joule heater is relatively high, which can instantly raise the temperature of the material storage member 620 and the silicon solar cells to gasify silver and aluminum on the silicon solar cells, thus improving the gasification efficiency of the gasification apparatus 600. In addition, silver and aluminum are coated on outer surfaces of silicon slices. When the Joule heater is adopted to instantly raise the temperature of the silicon solar cells, only silver and aluminum coated onto the outer surfaces of the silicon slices will be gasified, without causing the silicon slices to be gasified. Further, to conveniently control the temperature that the heater 610 heats the material storage member 620, a temperature detection member 680 may be provided in the material storage member 620. The temperature detection member 680 is configured to detect the temperature in a storage space inside the material storage member 620, so that the temperature of the heater 610 can be controlled according to the temperature detected by the temperature detection member 680, thus achieving precise control over the temperature of the silicon solar cells.

In the previous embodiment, the gas discharged out of the gas outlet 622 contains silver and aluminum. To recycle silver and aluminum, in an alternative embodiment, the gasification apparatus 600 further includes a recycling pipeline 630. The recycling pipeline 630 includes a gas conveying pipeline 631, a silver condensation pipeline 632 and an aluminum condensation pipeline 633. The gas conveying pipeline 631 is provided with a gas inlet, a first outlet and a second outlet. The gas inlet is communicated with the gas outlet 622. A first end of the silver condensation pipeline 632 is communicated with the first outlet in a switchable manner. A first end of the aluminum condensation pipeline 633 is communicated with the second outlet in a switchable manner. A second end of the silver condensation pipeline 632 is a liquid silver outlet end, and a second end of the aluminum condensation pipeline 633 is a liquid aluminum outlet end. Alternatively, each of the silver condensation pipeline 632 and the aluminum condensation pipeline 633 may be provided with a switching valve 670, so that the silver condensation pipeline 632 and the aluminum condensation pipeline 633 can be respectively communicated with the gas conveying pipeline 631 in a switchable manner. The specific operation process is as follows: the gasification temperature of silver is lower than the gasification temperature of aluminum. The heater 610 is controlled to heat the material storage member 620 to be within a first temperature range, where a lower limit of the first temperature range is greater than the gasification temperature of silver, and the gasification temperature of aluminum is outside the first temperature range, so that only silver attached to the silicon slices is gasified; at the same time, the silver condensation pipeline 632 may be controlled to be communicated with the gas conveying pipeline 631, the aluminum condensation pipeline 633 may be disconnected from the gas conveying pipeline 631, and a silver-containing gas may enter the silver condensation pipeline 632 through the gas conveying pipeline 631 and is condensed to form liquid silver for ease of recycling. After silver is gasified, the heater 610 is controlled to heat the material storage member 620 to be within a second temperature range, where a lower limit of the second temperature range is greater than the gasification temperature of aluminum, so that aluminum attached to the silicon slices can be gasified; at the same time, the aluminum condensation pipeline 633 may be controlled to be communicated with the gas conveying pipeline 631, the silver condensation pipeline 632 may be disconnected from the gas conveying pipeline 631, and an aluminum-containing gas may enter the aluminum condensation pipeline 633 through the gas conveying pipeline 631 and is condensed to form liquid aluminum for ease of recycling. It can be seen that gasified silver and aluminum can be recycled through the recycling pipeline 630 in this embodiment, thus improving the recycling rate of the photovoltaic cell module 300.

Further, the gasification apparatus 600 further includes a collection box 692. The collection box 692 includes a silver collection portion and an aluminum collection portion which are independent of each other. The silver condensation pipeline 632 is located above the silver collection portion, and the second end of the silver condensation pipeline is communicated with the silver collection portion to allow the liquid silver to enter the silver collection portion. The aluminum condensation pipeline 633 is located above the aluminum collection portion, and the second end of the aluminum condensation pipeline is communicated with the aluminum collection portion to allow the liquid aluminum to enter the aluminum collection portion. Further, the gasification apparatus 600 further includes a second cooling apparatus. The second cooling apparatus is configured to cool the collection box 692 to solidify the liquid silver and the liquid aluminum into solids for ease of recycling. Alternatively, the second cooling apparatus may be a liquid nitrogen cooler.

Alternatively, the gasification apparatus 600 further includes a vacuum pump 691. A suction port of the vacuum pump 691 is communicated with the material storage member 620 to create negative pressure in the material storage member 620, thus reducing evaporation boiling points of silver and aluminum, and preventing silver and aluminum from being oxidized.

In the previous embodiment, in a case that the silver-containing gas is condensed at a position close to the first end of the silver condensation pipeline 632, due to the high viscosity of the liquid silver, if an inclination of the silver condensation pipeline 632 is relatively small, the liquid silver adhered to the silver condensation pipeline 632 cannot easily flow to the second end of the silver condensation pipeline 632, which may not only reduce the silver recycling rate, but also cause the silver condensation pipeline 632 to be blocked. Similarly, if an inclination of the aluminum condensation pipeline 633 is relatively small, it may not only reduce the aluminum recycling rate, but also cause the aluminum condensation pipeline 633 to be blocked. To solve the above problem, further, an axis direction of the silver condensation pipeline 632 and/or an axis direction of the aluminum condensation pipeline 633 extend vertically, that is to say, the silver condensation pipeline 632 and/or the aluminum condensation pipeline 633 are vertical pipe sections, and the vertical pipe sections may not provide support for the liquid silver/liquid aluminum, so that the liquid silver/liquid aluminum is more likely to flow to the second end of the silver condensation pipeline 632/the second end of the aluminum condensation pipeline 633 under its own gravity.

In an alternative embodiment, a first insulation member 640 is provided outside the gas conveying pipeline 631. The first insulation member 640 may heat the gas conveying pipeline 631, and the first insulation member 640 is provided around a circumferential direction of the gas conveying pipeline 631 and extends along an axial direction of the gas conveying pipeline 631. Alternatively, the first insulation member 640 may be a heating induction cable, a heat exchanger or the like. The first insulation member 640 may be wound around the outside of the gas conveying pipeline 631, or may completely wrap the outside of the gas conveying pipeline 631. Alternatively, the number of the first insulation members 640 may be multiple sets. The multiple sets of first insulation members 640 are spaced apart along the axial direction of the gas conveying pipeline 631, and each set of first insulation members 640 includes multiple first insulation members 640 spaced apart along the circumferential direction of the gas conveying pipeline 631. In this embodiment, the first insulation member 640 may heat the gas conveying pipeline 631, thus preventing the temperature of the gas conveying pipeline 631 from being too low to prevent the silver-containing gas or the aluminum-containing gas from being condensed in the gas conveying pipeline 631, thus improving the recycling rate of silver and aluminum, and preventing the liquid silver or the liquid aluminum from blocking the condensation pipeline.

And/or, in an alternative embodiment, a second insulation member 650 is provided outside the silver condensation pipeline 632. The second insulation member 650 may heat the silver condensation pipeline 632, and the second insulation member 650 is provided around a circumferential direction of the silver condensation pipeline 632 and extends along an axial direction of the silver condensation pipeline 632. Alternatively, the second insulation member 650 may be a heating induction cable, a heat exchanger or the like. The arrangement of the second insulation member 650 outside the silver condensation pipeline 632 may be the same as that of the first insulation member 640, which will not be repeated here. In this embodiment, the second insulation member 650 may heat the silver condensation pipeline 632, thus preventing the temperature of the silver condensation pipeline 632 from being too low to prevent the silver-containing gas from being condensed at a position far away from the second end of the silver condensation pipeline 632. That is to say, by controlling the second insulation member 650, the silver-containing gas may be conveyed to a position close to the second end of the silver condensation pipeline 632 before being condensed, thus improving the recycling rate of silver, and preventing the liquid silver from blocking the silver condensation pipeline 632.

And/or, in an alternative embodiment, a third insulation member 660 is provided outside the aluminum condensation pipeline 633. The third insulation member 660 may heat the aluminum condensation pipeline 633, and the third insulation member 660 is provided around a circumferential direction of the aluminum condensation pipeline 633 and extends along an axial direction of the aluminum condensation pipeline 633. Alternatively, the third insulation member 660 may be a heating induction cable, a heat exchanger or the like. The arrangement of the third insulation member 660 outside the aluminum condensation pipeline 633 may be the same as that of the first insulation member 640, which will not be repeated here. In this embodiment, the third insulation member 660 may heat the aluminum condensation pipeline 633, thus preventing the temperature of the aluminum condensation pipeline 633 from being too low to prevent the aluminum-containing gas from being condensed at a position far away from the second end of the aluminum condensation pipeline 633. That is to say, by controlling the third insulation member 660, the aluminum-containing gas may be conveyed to a position close to the second end of the aluminum condensation pipeline 633 before being condensed, thus improving the recycling rate of aluminum, and preventing the liquid aluminum from blocking the aluminum condensation pipeline 633.

Alternatively, to accurately control the temperature of the second insulation member 650 and the third insulation member 660, temperature detection members 680 may be respectively provided on the silver condensation pipeline 632 and the aluminum condensation pipeline 633 to respectively detect the temperature inside the silver condensation pipeline 632 and the aluminum condensation pipeline 633. The heating power of the second insulation member 650 and the third insulation member 650 may be respectively controlled according to the temperature detected by the two temperature detection members 680, so as to accurately control the temperature of the second insulation member 650 and the third insulation member 660.

In an alternative embodiment, in a direction extending from the first end of the silver condensation pipeline 632 to the second end of the silver condensation pipeline 632, the temperature of the silver condensation pipeline 632 gradually decreases. In this embodiment, the temperature of the silver condensation pipeline 632 gradually decreases in the direction extending from the first end to the second end, which can cause the silver-containing gas to gradually cool down, so that the silver-containing gas is condensed at the second end of the silver condensation pipeline 632, thus improving the recycling rate of silver, and preventing the liquid silver from blocking the silver condensation pipeline 632. Of course, in the above direction, the temperature of the silver condensation pipeline 632 may also be kept constant.

And/or, in a direction extending from the first end of the aluminum condensation pipeline 633 to the second end of the aluminum condensation pipeline 633, the temperature of the aluminum condensation pipeline 633 gradually decreases. In this embodiment, the temperature of the aluminum condensation pipeline 633 gradually decreases in the direction extending from the first end to the second end, which can cause the aluminum-containing gas to gradually cool down, so that the aluminum-containing gas is condensed at the second end of the aluminum condensation pipeline 633, thus improving the recycling rate of aluminum, and preventing the liquid aluminum from blocking the aluminum condensation pipeline 633. Of course, in the above direction, the temperature of the aluminum condensation pipeline 633 may also be kept constant.

In an alternative embodiment, the second insulation member 650 is wound around the outside of the silver condensation pipeline 632, and in the direction extending from the first end of the silver condensation pipeline 632 to the second end of the silver condensation pipeline 632, the winding spacing of the second insulation member 650 gradually increases. In this embodiment, the second insulation member 650 is wound around the outside of the silver condensation pipeline 632. That is to say, the second insulation member 650 extends along a spiral path. The winding spacing of the second insulation member 650 refers to a distance L between adjacent two turns of the second insulation member 650, that is, the lead of the second insulation member 650. In the direction extending from the first end of the silver condensation pipeline 632 to the second end of the silver condensation pipeline 632, the winding spacing of the second insulation member 650 increases, causing the temperature of the silver condensation pipeline 632 in this direction to gradually decrease, that is, causing the silver-containing gas to gradually cool down, so that the silver-containing gas is condensed at the second end of the silver condensation pipeline 632. Of course, the winding spacing of the second insulation member 650 may also be kept constant.

In addition to the above embodiments, the number of the second insulation members 650 may also be multiple. Each second insulation member 650 extends along the circumferential direction of the silver condensation pipeline 632. The multiple second insulation members 650 are spaced apart along the axial direction of the silver condensation pipeline 632, and in the direction extending from the first end to the second end of the silver condensation pipeline 632, the arrangement density of the second insulation members 650 gradually decreases, that is, the number of the arranged second insulation members 650 gradually decreases, so that the temperature of the silver condensation pipeline 632 gradually decreases. In this embodiment, the second insulation member 650 may be ring-shaped, U-shaped, arc-shaped, or the like. Alternatively, the heating power of each second insulation member 650 gradually decreases in the direction extending from the first end to the second end of the silver condensation pipeline 632, so that the temperature of the silver condensation pipeline 632 gradually decreases.

And/or, in an alternative embodiment, the third insulation member 660 is wound around the outside of the aluminum condensation pipeline 633, and in the direction extending from the first end of the aluminum condensation pipeline 633 to the second end of the aluminum condensation pipeline 633, the winding spacing of the third insulation member 660 gradually increases. In this embodiment, the third insulation member 660 is wound around the outside of the aluminum condensation pipeline 633. That is to say, the third insulation member 660 extends along a spiral path. The winding spacing of the third insulation member 660 refers to a distance between adjacent two turns of the third insulation member 660, that is, the lead of the third insulation member 660. In the direction extending from the first end of the aluminum condensation pipeline 633 to the second end of the aluminum condensation pipeline 633, the winding spacing of the third insulation member 660 increases, causing the temperature of the aluminum condensation pipeline 633 in this direction to gradually decrease, that is, causing the aluminum-containing gas to gradually cool down, so that the aluminum-containing gas is condensed at the second end of the aluminum condensation pipeline 633. Of course, the winding spacing of the third insulation member 660 may also be kept constant.

In addition to the above embodiments, the number of the third insulation members 660 may also be multiple. Each third insulation member 660 extends along the circumferential direction of the aluminum condensation pipeline 633. The multiple third insulation members 660 are spaced apart along the axial direction of the aluminum condensation pipeline 633, and in the direction extending from the first end to the second end of the aluminum condensation pipeline 633, the arrangement density of the third insulation members 660 gradually decreases, that is, the number of the arranged third insulation members 660 gradually decreases, so that the temperature of the aluminum condensation pipeline 633 gradually decreases. In this embodiment, the third insulation member 660 may be ring-shaped, U-shaped, arc-shaped, or the like. Alternatively, the heating power of each third insulation member 660 gradually decreases in the direction extending from the first end to the second end of the aluminum condensation pipeline 633, so that the temperature of the aluminum condensation pipeline 633 gradually decreases.

In an alternative embodiment, the recycling system further includes condensing equipment 420. The condensing equipment 420 is provided with a thermal desorption gas inlet, a thermal desorption gas outlet and a liquid oil outlet. The thermal desorption gas inlet is communicated with the gas outlet of the thermal desorption equipment 410. The condensing equipment 420 may condense the thermal desorption gas generated by the thermal desorption equipment 410 to obtain liquid oil. In the thermal desorption process of the photovoltaic cell module 300 by using the thermal desorption equipment 410, the EVA adhesive in the photovoltaic cell module 300 may be pyrolyzed. Therefore, the pyrolyzed EVA adhesive may be discharged from the thermal desorption gas outlet along with the thermal desorption gas. However, in this embodiment, the condensing equipment 420 is connected to the thermal desorption gas outlet, so that the thermal desorption gas can enter the condensing equipment 420, thus cooling the thermal desorption gas, allowing the EVA adhesive in the thermal desorption gas to be condensed into liquid oil for recycling, and thus improving the recycling rate of the photovoltaic cell module 300. Alternatively, the thermal desorption gas outlet may be directly communicated with the condensing equipment 420, or indirectly communicated through a cyclone dust removal apparatus 440. The cyclone dust removal apparatus 440 can remove dust from the thermal desorption gas to improve the purity of the liquid oil recycled through the condensing equipment 420.

In the previous embodiment, part of the thermal desorption gas is not condensed, and directly discharging this part of thermal desorption gas may pollute the environment. Therefore, in an alternative embodiment, the recycling system further includes an exhaust gas treatment unit 430. A gas inlet of the exhaust gas treatment unit 430 is communicated with the thermal desorption gas outlet. In this embodiment, the exhaust gas treatment unit 430 may perform purification treatment on the thermal desorption gas to prevent the thermal desorption gas from polluting the environment. Further, a gas outlet of the exhaust gas treatment unit 430 is communicated with a fuel inlet of the thermal desorption equipment 410, so that exhaust gas released by the exhaust gas treatment unit 430 can be conveyed to the thermal desorption equipment 410 to serve as fuel for the thermal desorption equipment 410, thus saving the energy. Of course, if the thermal desorption equipment 410 adopts electric heating, the gas outlet of the exhaust gas treatment unit 430 may not be communicated with the fuel inlet of the thermal desorption equipment 410.

In an alternative embodiment, the recycling system further includes a mobile disassembling device assembly 700. The mobile disassembling device assembly 700 includes a mobile chassis 710, and a frame disassembling device 720, a photovoltaic backboard removal device 730 and a glass disassembling device 740 which are provided on the mobile chassis 710. A discharging port of the frame disassembling device 720 is communicated with a feeding port of the photovoltaic backboard removal device 730. A discharging port of the photovoltaic backboard removal device 730 is communicated with a feeding port of the glass disassembling device 740. Alternatively, the mobile chassis 710 may be a crawler chassis, a tire type chassis, or the like. In this embodiment, the frame disassembling device 720 may remove an aluminum frame of the photovoltaic cell module 300, the photovoltaic backboard removal device 730 may remove a photovoltaic backboard 310 of the photovoltaic cell module 300, and the glass disassembling device 740 may remove bottom glass of the photovoltaic cell module 300. That is to say, the mobile disassembling device assembly 700 may sequentially remove the aluminum frame, the photovoltaic backboard 310, and the bottom glass of the photovoltaic cell module 300. In addition, after the frame disassembling device 720, the photovoltaic backboard removal device 730 and the glass disassembling device 740 are provided on the mobile chassis 710, they can move along with the mobile chassis 710, so that the mobile disassembling device assembly 700 may directly perform operations in a photovoltaic power station. After all the photovoltaic cell modules 300 in the photovoltaic power station are treated, the mobile disassembling device assembly 700 may convey laminated parts of the disassembled aluminum frame, photovoltaic backboard 310 and bottom glass out of the station for treatment. Therefore, this solution can reduce the recycling cost of the photovoltaic cell module 300.

Further, the mobile disassembling device assembly 700 further includes a frame conveying apparatus 750, a backboard conveying apparatus 760, a glass conveying apparatus 770 and a feeding belt 780. A discharging port of the feeding belt 780 extends to the feeding port of the frame disassembling device 720 to convey the photovoltaic cell module 300 to the frame disassembling device 720. A feeding port of the frame conveying apparatus 750 extends to a frame outlet of the frame disassembling device 720 to convey the disassembled frame away from the mobile disassembling device assembly 700. A feeding port of the backboard conveying apparatus 760 extends to a backboard outlet of the photovoltaic backboard removal device 730 to convey the disassembled photovoltaic backboard 310 away from the mobile disassembling device assembly 700. A feeding port of the glass conveying apparatus 770 extends to a glass outlet of the glass disassembling device 740 to convey the disassembled glass away from the mobile disassembling device assembly 700.

In an alternative embodiment, the recycling system further includes a feeding manipulator 460, the frame disassembling device 720, the photovoltaic backboard removal device 730 and the glass disassembling device 740. The discharging port of the frame disassembling device 720 is communicated with the feeding port of the photovoltaic backboard removal device 730. The discharging port of the photovoltaic backboard removal device 730 is communicated with the feeding port of the glass disassembling device 740. A discharging port of the glass disassembling device 740 is communicated with the feeding port of the thermal desorption equipment 410 to convey the photovoltaic cell modules 300 with the aluminum frame, photovoltaic backboard 310 and bottom glass removed to the thermal desorption equipment 410. The feeding manipulator 460 is configured to place the photovoltaic cell module 300 into the feeding port of the frame disassembling device 720. In addition, the feeding port of the thermal desorption equipment 410 is further provided with a feeding apparatus 450. The feeding apparatus 450 includes a feeding funnel and a screw conveyor that are communicated with each other. The discharging port of the glass disassembling device 740 is communicated with a feeding port of the feeding funnel. A discharging port of the screw conveyor is communicated with the feeding port of the thermal desorption equipment 410.

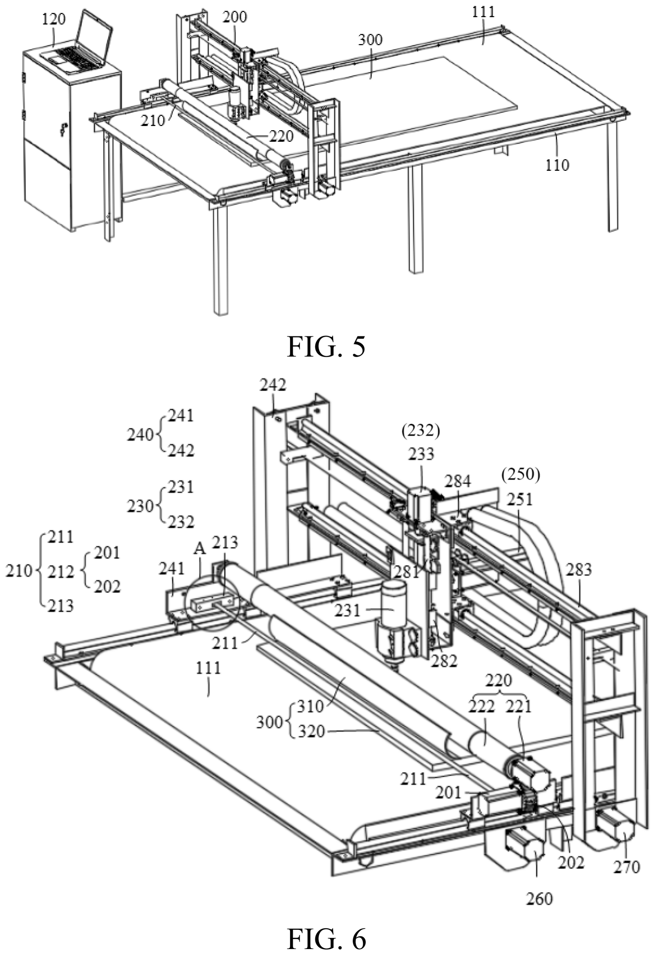

As shown in FIG. 5 to FIG. 9, the photovoltaic backboard removal device 730 includes a workbench 110 and a removal apparatus 200. The workbench 110 is provided with a bearing surface for bearing the photovoltaic cell module 300. The removal apparatus 200 is provided on the workbench 110, and the bearing surface and the removal apparatus 200 are movable relative to each other. Alternatively, the technical solution that the bearing surface and the removal apparatus 200 are movable relative to each other in this application includes three implementations. The first implementation is as follows: the bearing surface is fixedly provided on the workbench 110, and the removal apparatus 200 is movable relative to the workbench 110, and the removal apparatus 200 moves relative to the bearing surface during the movement of the removal apparatus 200. The second implementation is as follows: the bearing surface is movably provided on the workbench 110, the removal apparatus 200 is fixedly provided on the workbench 110, and the bearing surface moves relative to the removal apparatus 200 during the relative movement of the bearing surface. The bearing surface here may be a conveying surface of the conveying apparatus, such as an outer surface of a conveyor belt of a belt conveyor. The third implementation is as follows: both the bearing surface and the removal apparatus 200 are movable relative to the workbench 110, and the bearing surface and the removal apparatus 200 may move relative to each other during their respective movement. In addition, a relative movement direction between the bearing surface and the removal apparatus 200 may be a length direction, a width direction or a diagonal direction of the workbench 110, which is not limited in this application. Further, the photovoltaic backboard removal device 730 further includes a control system 120 to control the automatic operation of various components in the photovoltaic backboard removal device 730.

Further, the bearing surface is provided with a second adsorption hole. The second adsorption hole may be communicated with an external vacuum apparatus to adsorb and fix the photovoltaic cell module 300 on the bearing surface, so as to facilitate the removal apparatus 200 to separate the photovoltaic backboard 310 from the photovoltaic module 320.

The removal apparatus 200 includes a cutting assembly 210 and a winding assembly 220. The cutting assembly 210 includes a cutter 211 configured to separate the photovoltaic backboard 310 of the photovoltaic cell module 300 from the photovoltaic module 320. Alternatively, the thickness of the cutter 211 may be 0.2 mm to 0.8 mm, and the cutter may be made of a stainless steel material.

The winding assembly 220 is spaced apart from the cutter 211, and a distance between the two is less than a first preset value. That is, the winding assembly 220 is located adjacent to the cutter 211, and an extension direction of the cutter 211 intersects with the relative movement direction of the bearing surface and the removal apparatus 200. The winding assembly 220 is configured to wind the cut photovoltaic backboard 310. That is to say, after the cutter 211 cuts the photovoltaic backboard 310 from the photovoltaic module 320, the winding assembly 220 winds up the cut photovoltaic backboard 310. Specifically, the photovoltaic cell module 300 includes the photovoltaic backboard 310 and the photovoltaic module 320. Here, the photovoltaic module 320 is the part of the photovoltaic cell module 300 excluding the photovoltaic backboard 310, and includes a solar cell, glass, and the like. The extension direction of the cutter 211 may be parallel to the bearing surface, and an extension length of the cutter 211 is greater than or equal to the maximum length of a to-be-cut end of the photovoltaic backboard 310, so as to completely separate the photovoltaic backboard 310 from the photovoltaic module 320. Here, the to-be-cut end of the photovoltaic backboard 310 may be one end of the photovoltaic backboard 310 along the length direction, the width direction, or the diagonal direction.

When the photovoltaic backboard removal device 730 in this application is used, the photovoltaic cell module 300 may be provided on the bearing surface, and the removal apparatus 200 is movable relative to the bearing surface. The removal apparatus 200 includes a cutter 211 and a winding assembly 220, and the cutter 211 and the winding assembly 220 are movable relative to the bearing surface. In the process that the removal apparatus 200 moves relative to the bearing surface, the cutter 211 may gradually cut the photovoltaic backboard 310 from the photovoltaic module 320. In addition, in the process that the cutter 211 gradually cuts the photovoltaic backboard 310, the winding assembly 220 may wind the cut photovoltaic backboard 310 to collect the photovoltaic backboard 310 separated from the photovoltaic module 320. It can be seen that in this application, the photovoltaic backboard 310 is first peeled off from the photovoltaic module 320 through the cutter 211, and then the winding assembly 220 winds the photovoltaic backboard 310 peeled off by the cutter 211. That is to say, the winding assembly 220 is configured to wind the photovoltaic backboard 310 that is not connected with the photovoltaic module 320, thus preventing the photovoltaic backboard 310 from being damaged.

Due to the presence of the EVA adhesive between the photovoltaic backboard 310 and the photovoltaic module 320, the bonding strength of the EVA adhesive is relatively high, which is not conducive to the cutting of the photovoltaic backboard 310 by the cutter 211. Therefore, in an alternative embodiment, the removal apparatus 200 further includes a heating member 230. The heating member 230 is spaced apart from the cutter 211, and a distance therebetween is less than a second preset value, that is, the heating member 230 is located close to the cutter 211. The heating member 230 is provided opposite to the bearing surface, and the heating member may heat the end close to the cutter 211 of the photovoltaic backboard 310 to be cut. Specifically, when this embodiment is combined with the solution that a supporting frame 240 includes a first bracket 241 and a second bracket 242 that are separately provided, a third driving mechanism 270 may drive the second bracket 242 and the heating member 230 provided thereon to slide to a position close to or away from the cutter 211.

In this embodiment, the heating member 230 may be provided close to the cutter 211, a heating end of the heating member 230 may face to the end close to the cutter 211 of the photovoltaic backboard 310 to be cut to heat this part of the photovoltaic backboard 310, and the heating temperature may be 100°C to 250°C. That is to say, before the cutter 211 cuts the photovoltaic backboard 310, the heating member 230 first heats the photovoltaic backboard 310 to soften the EVA adhesive between the photovoltaic backboard 310 and the photovoltaic module 320, thus reducing the bonding strength of the EVA adhesive to facilitate the cutting of the photovoltaic backboard 310 by the cutter 211. Alternatively, the heating member 230 may be a hot air blower. A heating end of the hot air blower is a hot air outlet of the hot air blower, and the hot air temperature of the hot air blower may be controlled to 100°C to 280°C. In addition, besides the hot air blower, other components that can heat the photovoltaic backboard 310 may also be selected. The types of the heating member 230 is not limited in this application.

Further, the workbench 110 includes a cooling plate 111, and the cooling plate 111 is provided with the above-mentioned bearing surface for bearing the photovoltaic cell module 300. If the workbench 110 does not include the cooling plate 111, in the process that the heating member 230 heats the photovoltaic backboard 310, the heat of the photovoltaic backboard 310 may be transferred to the photovoltaic module 320, causing the temperature of the photovoltaic module 320 to rise, which may damage the solar cell and the bottom glass of the photovoltaic module 320, thus resulting in that the solar cell and the bottom glass cannot be recycled. In this embodiment, when the photovoltaic backboard 310 is cut, the bottom glass of the photovoltaic backboard 310 may be adhered to the cooling plate 111, and the cooling plate 111 may cool down the heated photovoltaic backboard 310, thus preventing the solar cell and the bottom glass of the photovoltaic module 320 from being damaged. Further, a space for accommodating a cooling medium is provided inside the cooling plate 111, and the cooling plate 111 is provided with a cooling medium inlet and a cooling medium outlet, thus cooling the photovoltaic module 320 through circulating heat exchange.

In an alternative embodiment, the removal apparatus 200 further includes a supporting frame 240 provided on the workbench 110. The cutting assembly 210, the winding assembly 220 and the heating member 230 are all provided on the supporting frame 240. The heating member 230 includes a heating source 231 configured to heat the photovoltaic backboard 310 and a telescopic driving member 232. One end of the telescopic driving member 232 is connected with the supporting frame 240, and the other end of the telescopic driving member 232 is connected with the heating source 231 to drive the heating source 231 to move in a direction close to or away from the bearing surface. Alternatively, the heating source 231 may be a hot air blower. The telescopic driving member 232 may drive the heating source 231 to extend and retract along a vertical direction, or may drive the heating source 231 to extend and retract along a direction inclined relative to the vertical direction, so as to adjust a distance between the heating member 230 and the photovoltaic backboard 310, and the distance may be 10 mm to 50 mm. The telescopic driving member 232 may be a hydraulic cylinder, an air cylinder, an electric cylinder or the like, or the telescopic driving member 232 includes a second driving source 233 and a first transmission mechanism. Two ends of the first transmission mechanism are respectively connected with the second driving source 233 and the heating source 231 to drive the heating source 231 to move. The second driving source 233 may be a motor or a hydraulic motor. The transmission mechanism may be a screw-nut mechanism, a gear-rack mechanism, a belt conveyor mechanism, a sprocket-chain mechanism, or the like. In this embodiment, the telescopic driving member 232 may drive the heating source 231 to move in the direction close to or away from the bearing surface. That is to say, a vertical distance between the heating source 231 and the bearing surface can be adjusted by the telescopic driving member 232 to adjust the heating effect of the heating source 231 on the photovoltaic backboard 310, thus preventing the photovoltaic module 320 from being overheated while ensuring that the heating source 231 has a good softening effect on the EVA adhesive.

Further, the removal apparatus 200 further includes a first guide rod 281 and a first slider 282. The first guide rod 281 is connected with the second driving source 233 and extends along an extension and retraction direction of the heating source 231, and the first slider 282 is connected with a hot air source and is in sliding fit with the first guide rod 281. In this embodiment, the first guide rod 281 and the first slider 282 provide guidance for the movement of the heating source 231 to increase the stability of the movement of the heating source 231.

Alternatively, the heating end of the heating member 230 may be extended along the extension direction of the cutter 211, so that the heating end of the heating member 230 completely covers all areas of the photovoltaic backboard 310 in the extension direction of the cutter 211, so as to ensure that the heating member 230 heats all areas of the photovoltaic backboard 310 in the extension direction of the cutter 211. However, adopting this solution may increase the volume and heating power of the heating member 230. In an alternative embodiment, the removal apparatus 200 further includes a supporting frame 240 provided on the workbench 110 and a first driving mechanism 250. The cutting assembly 210, the winding assembly 220 and the heating member 230 are all provided on the supporting frame 240. The heating member 230 is in sliding fit with the supporting frame 240. A sliding direction of the heating member 230 is parallel to the bearing surface and intersects with the relative movement direction of the bearing surface and the removal apparatus 200. One end of the first driving mechanism 250 is connected with the supporting frame 240, and the other end of the first driving mechanism 250 is connected with the heating member 230 to drive the heating member 230 to slide. Alternatively, the supporting frame 240 is provided with a second guide rod 283. The second guide rod 283 extends along the sliding direction of the heating member 230. The heating member 230 is further provided with a second slider 284. The second slider 284 is in sliding fit with the second guide rod 283. The second guide rod 283 may guide the sliding of the heating member 230, thus improving the sliding stability of the heating member 230. In this embodiment, the heating member 230 may slide along the supporting frame 240, so that the coverage area of the heating member 230 is larger to increase the heating area of the heating member 230 on the photovoltaic backboard 310, thus ensuring that the heating member 230 can heat all areas of the photovoltaic backboard 310 along the extension direction of the cutter 211, without requiring the heating end of the heating member 230 to cover all areas of the photovoltaic backboard 310 along the extension direction of the cutter 211. Therefore, adopting the solution of this embodiment can reduce the volume and heating power of the heating member 230.

Alternatively, the first driving mechanism 250 may be a hydraulic cylinder, an air cylinder, an electric cylinder or the like, or the first driving mechanism 250 includes a third driving source 251 and a second transmission mechanism. Two ends of the second transmission mechanism are respectively connected with the third driving source 251 and the heating member 230 to drive the heating member 230 to slide. The third driving source 251 may be a motor or a hydraulic motor. The transmission mechanism may be a screw-nut mechanism, a gear-rack mechanism, a belt conveyor mechanism, a sprocket-chain mechanism, or the like.

In an alternative embodiment, the removal apparatus 200 further includes a supporting frame 240 provided on the workbench 110. The supporting frame 240 includes a first bracket 241 and a second bracket 242 that are separately provided. The cutting assembly 210 and the winding assembly 220 are both provided on the first bracket 241. The heating member 230 is provided on the second bracket 242. The first bracket 241 and the second bracket 242 are respectively in sliding fit with the workbench 110, and sliding directions of the two are parallel. The removal apparatus 200 further includes a second driving mechanism 260 and a third driving mechanism 270. One end of the second driving mechanism 260 is connected with the workbench 110, and the other end of the second driving mechanism 260 is connected with the first bracket 241 to drive the first bracket 241 to slide. One end of the third driving mechanism 270 is connected with the workbench 110, and the other end of the third driving mechanism 270 is connected with the second bracket 242 to drive the second bracket 242 to slide. Alternatively, the structures of the second driving mechanism 260 and the third driving mechanism 270 may be the same, and each may include a fourth driving source 271 and a walking wheel 272. An output end of the fourth driving source 271 is connected with the walking wheel 272 to drive the walking wheel 272 to rotate. The first bracket 241 and the second bracket 242 are connected with the corresponding fourth driving source 271. The workbench 110 is provided with a matching beam, and the matching beam extends along the sliding direction of the first bracket 241. An outer peripheral surface of the walking wheel 272 is in contact with the matching beam, and when the fourth driving source 271 drives the walking wheel 272 to rotate, a friction force is generated between the walking wheel 272 and the matching beam to drive the first bracket 241 and the second bracket 242 to slide. In addition, the second driving mechanism 260 and the third driving mechanism 270 may also be driving components such as motor-driven screw-nut mechanisms.

In this embodiment, both the first bracket 241 and the second bracket 242 may slide along the relative movement direction between the bearing surface and the removal apparatus 200 on the workbench 110, and the first bracket 241 and the second bracket 242 are separate structures, so that the first bracket 241 and the second bracket 242 can be driven to slide respectively by the second driving mechanism 260 and the third driving mechanism 270, thus separately controlling the sliding direction and sliding speed of the first bracket 241 and the second bracket 242, and separately controlling the sliding direction and sliding speed of the cutting assembly 210 provided on the first bracket 241 and the heating member 230 provided on the second bracket 242. For example, the sliding direction of the heating member 230 may be made the same as the sliding direction of the cutting assembly 210, and the sliding speed of the heating member 230 may be made greater than the sliding speed of the cutting assembly 210. In this case, the distance between heating member 230 and the cutting assembly 210 will gradually increase. In this way, the heating member 230 can preheat an area of the photovoltaic backboard 310 away from the cutting assembly 210. After preheating is completed, the sliding direction of heating member 230 may be reversed to heat the preheated area of the photovoltaic backboard 310 close to the cutting assembly 210, thus improving the heating effect of the heating member 230 on the photovoltaic backboard 310. In addition, since the photovoltaic backboard 310 is continuously wound by the winding assembly 220, a diameter of the photovoltaic backboard 310 wound on the winding assembly 220 may become larger and larger. To avoid interference between the photovoltaic backboard 310 wound on the winding assembly 220 and the heating member 230, the second bracket 242 may be separately driven to move in a direction away from the first bracket 241, thus avoiding interference between the photovoltaic backboard 310 and the heating member 230. Of course, the cutting assembly 210, the winding assembly 220 and the heating member 230 may also be provided on the supporting frame 240 that is an integral structure.

In an alternative embodiment, the cutting assembly 210 further includes a reciprocating driving member 212. The reciprocating driving member 212 is connected with the cutter 211 to drive the cutter 211 to move back and forth along its extension direction. If the reciprocating driving member 212 is not provided, the cutter 211 is relatively fixed. In the process that the cutter 211 cuts the photovoltaic backboard 310, a friction force may be generated between the photovoltaic backboard 310 and the cutter 211, and a direction of the friction force is parallel to the relative movement direction between the bearing surface and the removal apparatus 200. That is to say, only a friction force in a direction opposite to a cutting direction of the photovoltaic backboard 310 exists between the photovoltaic backboard 310 and the cutter 211, and the friction force may obstruct the cutter 211 from cutting the photovoltaic backboard 310. In this embodiment, the reciprocating driving member 212 may drive the cutter 211 to move back and forth along its extension direction, that is, the reciprocating driving member 212 may drive the cutter 211 to move back and forth along a direction intersecting with the cutting direction of the photovoltaic backboard 310, and the friction force not only exists in the direction opposite to the cutting direction of the photovoltaic backboard 310 between the photovoltaic backboard 310 and the cutter 211, but also exists in the direction intersecting with the cutting direction of the photovoltaic backboard 310. When the friction force between the two objects increases in certain direction, the friction force in the other direction may decrease. Therefore, when the cutter 211 cuts the photovoltaic backboard 310 and the reciprocating driving member 212 is adopted to drive the cutter 211 to move back and forth along its extension direction, the friction force in the direction opposite to the cutting direction of the photovoltaic backboard 310 between the photovoltaic backboard 310 and the cutter 211 can be reduced, thus improving the cutting efficiency and enabling the photovoltaic backboard 310 to be separated from the photovoltaic module 320 more easily.

Alternatively, the reciprocating driving member 212 may be a hydraulic cylinder, an air cylinder, a motor-driven crank-slider mechanism or the like. This requires the reciprocating driving member 212 to be provided on one side of the cutter 211 along its extension direction, so that the width of the photovoltaic backboard removal device 730 in the extension direction of the cutter 211 may increase, resulting in that the photovoltaic backboard removal device 730 occupies a large mounting space in this direction. Alternatively, the first driving source 201 may be a motor or a hydraulic motor. In an alternative embodiment, the reciprocating driving member 212 includes a first driving source 201 and a transmission component 202. The first driving source 201 is connected with the transmission component 202 to drive the transmission component 202 to rotate. An outer peripheral surface of the transmission component 202 is provided with multiple first transmission teeth, one end of the cutter 211 is provided with multiple second transmission teeth, and the first transmission teeth are engaged with the second transmission teeth. In this embodiment, the multiple first transmission teeth of the transmission component 202 are spaced apart along a circumferential direction of the transmission component 202. The multiple second transmission teeth of the cutter 211 are spaced apart along the extension direction of the cutter 211. The first transmission teeth are engaged with the second transmission teeth, so that an axis direction of the transmission component 202 is perpendicular to the extension direction of the cutter 211. After the first driving source 201 is connected with the transmission component 202, the first driving source 201 is also provided on the side of the cutter 211 in a direction perpendicular to its extension direction. That is to say, by adopting the structure in this embodiment, the first driving source 201 may not be provided on the side of the cutter 211 along its extension direction, thus reducing the width of the photovoltaic backboard removal device 730 in the extension direction of the cutter 211.

To improve the stability of the cutter 211 in the sliding process, in an alternative embodiment, the cutting assembly 210 further includes a guide block 213. The guide block 213 is provided with a guide groove 203, and a part of the cutter 211 is located in the guide groove 203. The cutter 211 is in sliding fit with the guide groove 203 in its extension direction. In this embodiment, the cutter 211 is in sliding fit with the guide groove 203 in the extension direction of the cutter 211. That is to say, an inner wall of the guide groove 203 is in contact with the outer peripheral surface of the cutter 211. In this way, in the process that the reciprocating driving member 212 drives the cutter 211 to slide, the inner wall of the guide groove 203 can limit the cutter 211 to prevent the cutter 211 from deviating from its extension direction, thus improving the stability of the cutter 211 in the sliding process.

In an alternative embodiment, the winding assembly 220 includes a rotary driving member 221 and a winding roller 222. The rotary driving member 221 is connected with the winding roller 222 to drive the winding roller 222 to rotate. Alternatively, the rotary driving member 221 may be a motor or a hydraulic motor. In this embodiment, after the cutter 211 separates the photovoltaic backboard 310 from the photovoltaic module 320, an end portion of the photovoltaic backboard 310 may be fixed to the winding roller 222, and the photovoltaic backboard 310 may be wound around the outside of the winding roller 222 in the process that the rotary driving member 221 drives the winding roller 222 to rotate. To facilitate the fixing of the end portion of the photovoltaic backboard 310 to the winding roller 222, further, a fixing structure is provided on the winding roller 222. The fixing structure is configured to pick up the end portion of the cut photovoltaic backseat 310 and fix the end portion of the photovoltaic backboard 310 to the winding roller 222. In this embodiment, the fixing structure is provided on the winding roller 222. The fixing structure can automatically pick up the cut photovoltaic backboard 310 and fix the photovoltaic backboard 310 to the winding roller 222. That is to say, after the fixing structure is provided, there is no need to manually fix the end portion of the photovoltaic backboard 310 to the winding roller 222, thus simplifying the operation process of the photovoltaic backboard removal device 730.

In an alternative embodiment, the winding roller 222 is an adsorption roller, and the fixing structure includes a first adsorption hole provided in an outer peripheral surface of the adsorption roller. The first adsorption hole is configured to adsorb the end portion of the cut photovoltaic backboard 310. In this embodiment, the winding roller 222 is an adsorption roller, and negative pressure may be formed at a position close to the outer peripheral surface of the adsorption hole through the first adsorption hole. After the cutter 211 cuts the photovoltaic backboard 310, the photovoltaic backboard 310 may be adsorbed and fixed to the outer peripheral surface of the adsorption roller under the action of the negative pressure. It can be seen that by generating the negative pressure through the first adsorption hole to pick up the cut photovoltaic backboard 310, compared with the solution that the fixing structure is a clamping mechanism and the end portion of the photovoltaic backboard 310 is actively clamped by the clamping mechanism, the success rate that the fixing structure picks up the cut photovoltaic backboard 310 can be improved in this embodiment.

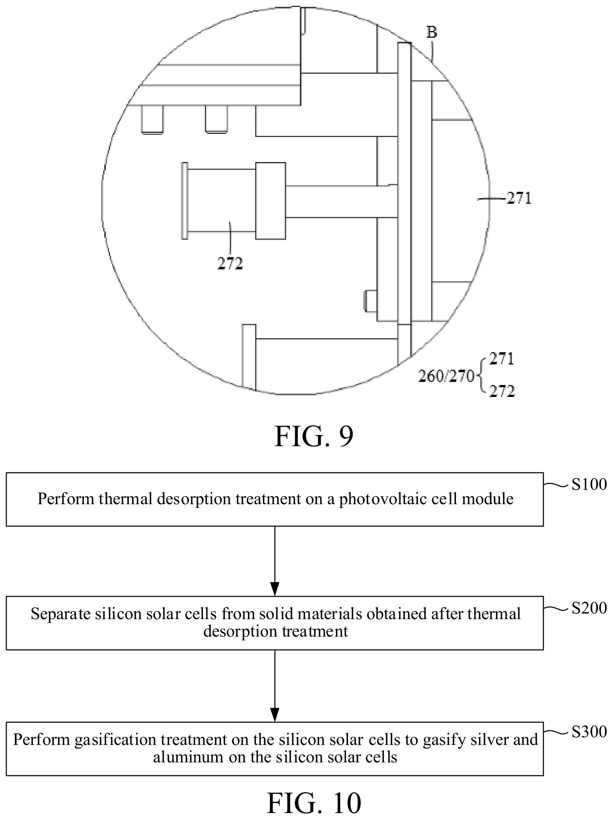

As shown in FIG. 10 and FIG. 11, an embodiment of this application further discloses a recycling method for a photovoltaic cell module applied to the recycling system in any one embodiment described above. The recycling method includes:
S100: thermal desorption treatment is performed on a photovoltaic cell module 300.

The photovoltaic cell module 300 here may be a photovoltaic cell module 300 after crushing or a photovoltaic cell module 300 before crushing. The photovoltaic cell module 300 may enter the thermal desorption equipment 410 through the feeding port of the thermal desorption equipment 410 for thermal desorption, and the thermal desorption temperature may be 450°C to 800°C. Alternatively, nitrogen may be introduced into the thermal desorption equipment 410 to control the oxygen content in the thermal desorption equipment 410 to be within 4%, thus preventing the thermal desorption equipment 410 from exploding. A heating method of the thermal desorption equipment 410 may be electromagnetic heating, resistive heating, or gas heating.

S200: silicon solar cells are separated from solid materials obtained after thermal desorption treatment.

The solid materials obtained after thermal desorption may enter the feeding port of the separation apparatus 500 through the discharging port of the thermal desorption equipment 410, and the separation apparatus 500 may separate the silicon solar cells from the solid materials.

S300: gasification treatment is performed on the silicon solar cells to gasify silver and aluminum on the silicon solar cells.

The separated silicon solar cells may enter the feeding port of the gasification apparatus 600 through the discharging port of separation apparatus 500, and then the gasification apparatus 600 may gasify silver and aluminum on the silicon solar cells.

By adopting the gasification treatment method to gasify silver and aluminum on the silicon solar cells, this application can obtain pure silicon slices without treating the silicon solar cells by using chemical solutions. Therefore, adopting the recycling method in this application to treat the silicon solar cells may not produce acidic and alkaline wastewater containing metal ions, thus reducing the recycling difficulty of the photovoltaic cell module 300.

In an alternative embodiment, in step S300, the step of performing gasification treatment on the silicon solar cells specifically includes:
performing gradient heating on the silicon solar cells to sequentially gasify silver and aluminum on the silicon solar cells.

The gasification temperature of silver is lower than the gasification temperature of aluminum. The temperature of the gasification apparatus 600 is controlled to be within a first temperature range, where a lower limit of the first temperature range is greater than the gasification temperature of silver, and the gasification temperature of aluminum is outside the first temperature range, so that only silver attached to the silicon slices can be gasified. After silver gasification is completed, the temperature of the gasification apparatus 600 is controlled to be within a second temperature range, where a lower limit of the second temperature range is greater than the gasification temperature of aluminum. Since the gasification temperature of silver is 2212°C and the gasification temperature of aluminum is 2467°C, the first temperature range may be 2200°C to 2300°C, and the second temperature range may be 2400°C to 2500°C.

The recycling method further includes:
S400: cooling treatment is sequentially performed on a silver-containing gas and an aluminum-containing gas obtained after gasification to respectively obtain liquid silver and liquid aluminum.

After silver and aluminum on the silicon solar cells are sequentially gasified, cooling treatment may be performed respectively on the silver-containing gas and the aluminum-containing gas to respectively recycle the liquid silver and the liquid aluminum, thus improving the recycling rate of the photovoltaic cell module 300.

In an alternative embodiment, before step S100, the recycling method further includes:
S500: a photovoltaic backboard 310 and bottom glass of the photovoltaic cell module 300 are removed.

Removing the photovoltaic backboard 310 before the thermal desorption treatment on the photovoltaic cell module 300 can prevent fluorine elements in the photovoltaic backboard 310 from being converted into hydrogen fluoride in the thermal desorption process, thus reducing the treatment difficulty of thermal desorption gas. Before the thermal desorption treatment is performed on the photovoltaic cell module 300, milling may be adopted to remove the bottom glass to reduce the heating energy consumption of the thermal desorption equipment 410.

S600: crushing treatment is performed on the photovoltaic cell module 300 with the backboard and the bottom glass removed.

A crusher may be used to crush the photovoltaic cell module 300, and particle sizes of the crushed materials may range from 30 mm to 80 mm to improve the thermal desorption efficiency of the thermal desorption equipment 410 on the photovoltaic cell module 300.

Step S100 specifically includes:
thermal desorption treatment is performed on the photovoltaic cell module 300 subjected to crushing treatment.

What are emphatically described in the embodiments of this application are the differences between the embodiments. As long as the different optimized features between the embodiments are not contradictory, they may be combined to form a better embodiment, which will not be repeated here for the sake of simplicity. The embodiments of this application have been described above with reference to the drawings. However, this application is not limited to the specific implementations above. The specific implementations above are only exemplary rather than restrictive. Under the inspiration of this application, those of ordinary skill in the art may make many variations without departing from the essence and the scope of protection of this application, which, however, still fall within the scope of protection of this application.

## Claims

1. A recycling system for a photovoltaic cell module, comprising thermal desorption equipment (410), a separation apparatus (500) and a gasification apparatus (600),
wherein a discharging port of the thermal desorption equipment (410) is communicated with a feeding port of the separation apparatus (500), the separation apparatus (500) is configured to separate silicon solar cells from solid materials obtained after thermal desorption, a discharging port of the separation apparatus (500) is communicated with a feeding port of the gasification apparatus (600), so that the separated silicon solar cells enter the gasification apparatus (600), and the gasification apparatus (600) is configured to gasify silver and aluminum on the silicon solar cells.

2. The recycling system according to claim 1, wherein the separation apparatus (500) comprises a screening machine (510) and a first separation machine (520), a feeding port of the screening machine (510) is communicated with the discharging port of the thermal desorption equipment (410), a feeding port of the first separation machine (520) is communicated with a discharging port of the screening machine (510), and a discharging port of the first separation machine (520) is communicated with the feeding port of the gasification apparatus (600).

3. The recycling system according to claim 2, wherein the separation apparatus (500) further comprises a second separation machine (530), the discharging port of the first separation machine (520) comprises a silicon solar cell outlet and a mixture outlet, the silicon solar cell outlet is communicated with the feeding port of the gasification apparatus (600), a feeding port of the second separation machine (530) is communicated with the mixture outlet, and
the solid materials with the silicon solar cells separated enter the second separation machine (530) through the mixture outlet.

4. The recycling system according to claim 3, wherein the screening machine (510) comprises a first screen (514) and a second screen (515), meshes of the first screen (514) are larger than meshes of the second screen (515), the first screen (514) is located between the feeding port of the screening machine (510) and the second screen (515),
the first separation machine (520) comprises a first specific gravity screener (521) and a second specific gravity screener (522), the discharging port of the screening machine (510) comprises a first discharging port (511) and a second discharging port (512), the first discharging port (511) is located between the first screen (514) and the second screen (515), the second screen (515) is located between the second discharging port (512) and the first discharging port (511),
a feeding port of the first specific gravity screener (521) is communicated with the first discharging port (511), a feeding port of the second specific gravity screener (522) is communicated with the second discharging port (512), a discharging port of the first specific gravity screener (521) comprises a first silicon solar cell outlet and a first mixture outlet, a discharging port of the second specific gravity screener (522) comprises a second silicon solar cell outlet and a second mixture outlet, the first silicon solar cell outlet and the second silicon solar cell outlet are respectively communicated with the feeding port of the gasification apparatus (600), the mixture outlet comprises the first mixture outlet and the second mixture outlet, and
the second separation machine (530) comprises a first eddy current separator (531) and an electrostatic separator (532), a feeding port of the first eddy current separator (531) is communicated with the first mixture outlet, and a feeding port of the electrostatic separator (532) is communicated with the second mixture outlet.

5. The recycling system according to claim 1, wherein the gasification apparatus (600) comprises a heater (610) and a material storage member (620), a heat transfer channel is provided between the heater (610) and the material storage member (620) to heat the material storage member (620), and
the material storage member (620) is provided with a silicon solar cell inlet (621) and a gas outlet (622), the silicon solar cell inlet (621) is communicated with the discharging port of the separation apparatus (500), and gasification gas obtained after gasification of aluminum and silver is discharged out of the material storage member (620) through the gas outlet (622).

6. The recycling system according to claim 5, wherein the gasification apparatus (600) further comprises a recycling pipeline (630), the recycling pipeline (630) comprises a gas conveying pipeline (631), a silver condensation pipeline (632) and an aluminum condensation pipeline (633),
the gas conveying pipeline (631) is provided with a gas inlet, a first outlet and a second outlet, the gas inlet is communicated with the gas outlet (622), a first end of the silver condensation pipeline (632) is communicated with the first outlet in a switchable manner, a first end of the aluminum condensation pipeline (633) is communicated with the second outlet in a switchable manner, and
a second end of the silver condensation pipeline (632) is a liquid silver outlet end, and a second end of the aluminum condensation pipeline (633) is a liquid aluminum outlet end.

7. The recycling system according to claim 6, wherein a first insulation member (640) is provided outside the gas conveying pipeline (631), the first insulation member (640) heats the gas conveying pipeline (631), and the first insulation member (640) is provided around a circumferential direction of the gas conveying pipeline (631) and extends along an axial direction of the gas conveying pipeline (631); and/or,
a second insulation member (650) is provided outside the silver condensation pipeline (632), the second insulation member (650) heats the silver condensation pipeline (632), and the second insulation member (650) is provided around a circumferential direction of the silver condensation pipeline (632) and extends along an axial direction of the silver condensation pipeline (632); and/or,
a third insulation member (660) is provided outside the aluminum condensation pipeline (633), the third insulation member (660) heats the aluminum condensation pipeline (633), and the third insulation member (660) is provided around a circumferential direction of the aluminum condensation pipeline (633) and extends along an axial direction of the aluminum condensation pipeline (633).

8. The recycling system according to claim 7, wherein in a direction extending from the first end of the silver condensation pipeline (632) to the second end of the silver condensation pipeline (632), the temperature of the silver condensation pipeline (632) gradually decreases; and/or,
in a direction extending from the first end of the aluminum condensation pipeline (633) to the second end of the aluminum condensation pipeline (633), the temperature of the aluminum condensation pipeline (633) gradually decreases.

9. The recycling system according to claim 8, wherein the second insulation member (650) is wound around the outside of the silver condensation pipeline (632), and in the direction extending from the first end of the silver condensation pipeline (632) to the second end of the silver condensation pipeline (632), the winding spacing of the second insulation member (650) gradually increases; and/or,
the third insulation member (660) is wound around the outside of the aluminum condensation pipeline (633), and in the direction extending from the first end of the aluminum condensation pipeline (633) to the second end of the aluminum condensation pipeline (633), the winding spacing of the third insulation member (660) gradually increases.

10. The recycling system according to claim 1, wherein the recycling system further comprises condensing equipment (420), the condensing equipment (420) is provided with a thermal desorption gas inlet, a thermal desorption gas outlet and a liquid oil outlet, the thermal desorption gas inlet is communicated with the gas outlet of the thermal desorption equipment (410), and the condensing equipment (420) condenses a thermal desorption gas generated by the thermal desorption equipment (410) to obtain liquid oil.

11. The recycling system according to claim 10, wherein the recycling system further comprises an exhaust gas treatment unit (430), and a gas inlet of the exhaust gas treatment unit (430) is communicated with the thermal desorption gas outlet.

12. The recycling system according to claim 1, wherein the recycling system further comprises a mobile disassembling device assembly (700), the mobile disassembling device assembly (700) comprises a mobile chassis (710), and a frame disassembling device (720), a photovoltaic backboard removal device (730) and a glass disassembling device (740) which are provided on the mobile chassis (710), and
a discharging port of the frame disassembling device (720) is communicated with a feeding port of the photovoltaic backboard removal device (730), and a discharging port of the photovoltaic backboard removal device (730) is communicated with a feeding port of the glass disassembling device (740).

13. A recycling method for a photovoltaic cell module applied to the recycling system according to any one of claims 1 to 12, wherein the recycling method comprises:
performing thermal desorption treatment on a photovoltaic cell module (300);
separating silicon solar cells from solid materials obtained after thermal desorption treatment; and
performing gasification treatment on the silicon solar cells to gasify silver and aluminum on the silicon solar cells.

14. The recycling method according to claim 13, wherein the step of performing gasification treatment on the silicon solar cells specifically comprises:
performing gradient heating on the silicon solar cells to sequentially gasify silver and aluminum on the silicon solar cells; and
the recycling method further comprises:
sequentially performing cooling treatment on silver-containing gas and aluminum-containing gas obtained after gasification to respectively obtain liquid silver and liquid aluminum.

15. The recycling method according to claim 13, wherein before the step of performing thermal desorption treatment on a photovoltaic cell module (300), the recycling method further comprises:
removing a photovoltaic backboard (310) and bottom glass of the photovoltaic cell module (300); and
performing crushing treatment on the photovoltaic cell module (300) with the backboard and the bottom glass removed; and
the step of performing thermal desorption treatment on a photovoltaic cell module (300) specifically comprises:
performing thermal desorption treatment on the photovoltaic cell module (300) subjected to crushing treatment.
